# EUROPÄISCHE PATENTSCHRIFT

(11) **EP 0 943 824 B1**
(45) Veröffentlichungstag und Bekanntmachung des Hinweises auf die Patenterteilung: **22.05.2002**
(21) Anmeldenummer: 99102652.7
(22) Anmeldetag: 12.02.1999
(51) Int. Cl.: F16B 21/02, H01R 4/30

(54) **Mechanisches Verbindungselement**
Fastener
Dispositif de fixation

(30) Priorität: 13.03.1998 DE 29804559 U
(43) Veröffentlichungstag der Anmeldung: 22.09.1999
(73) Patentinhaber: STRIEBEL & JOHN GmbH & Co. KG, D-77880 Sasbach (DE)
(72) Erfinder: Ott, Jürgen, 76706 Dettenheim (DE)
(74) Vertreter: Thoma, Friedrich, Dipl.-Ing.(FH)

(56) Entgegenhaltungen:
- US-A- 3 235 219
- US-A- 3 956 803
- US-A- 4 827 609
- US-A- 5 644 830

## Beschreibung

Die. Erfindung betrifft ein mechanisches Verbindungselement mit den Merkmalen nach dem Oberbegriff des Patentanspruchs 1.

Bei einem derartigen Verbindungselement zur mittelbar kraftschlüssigen, insbesondere lösbaren, Verbindung von flächigen Teilen, insbesondere von Blechen und Blechgehäuseteilen, ist es erforderlich, daß die zu verbindenden Teile mittels eines derartigen Elementes nicht nur präzise zueinander positionierbar sind, sondern auch, daß die Teile durch eine derartige Verbindung in ihrer Ebenheit nicht beeinträchtigt werden. Dabei soll sichergestellt sein, daß ein derartiges Verbindungselement nicht nur toleranzausgleichend, überdrehungs- und vibrationsgesichert, mit einem relativ hohen Schließmoment wirksam ist, sondern auch, daß ein solches Verbindungselement einfach, zweckmäßig, rationell und wirtschaftlich herstellbar und sowohl manuell, als auch maschinell montierbar ist. Außerdem soll sichergestellt sein, daß ein derartiges, zweckmäßigerweise metallisches. Verbindungselement im Einsatz in der Elektro- oder Elektroinstallationstechnik mit Eigenschaften zur zuverlässigen elektrisch leitenden Verbindung ausgestattet ist.

Die bekanntgewordenen, insbesondere lösbaren, Verbindungselemente, wie Verschraubungen, sind insbesondere zur kraftschlüssigen Verbindung von ebenen Blechen oder von Gehäuseteilen vielfach in ihrer Handhabung zu aufwendig und unwirtschaftlich teuer.

Aus der US-A-4 827 609 ist ein Verfahren und eine mittelbare Vorrichtung zur lösbar kraftschlüssigen Verbindung eines Bauelements auf einer Leiterplatte bekannt, mit einem Bolzen, der auf der einen Endseite einen, gegenüber dem Durchmesser des Bolzens, größeren Außendurchmesser sowie mit einer Quernut für den Eingriff eines Schraubenziehers versehen ist. und der auf der gegenüberliegenden Endseite mit einem einseitig radial abstehenden Riegel ausgestattet ist. Zur Befestigung eines Bauelements auf der Leiterplatte greift der Riegel durch ein entsprechend ausgebildetes Langloch in der Leiterplatte und wird um ca. 90° verdreht. Die auf der der Leiterplatte benachbarte, schräg verlaufende, Riegelfläche ist dort mit mehreren Rastzähnen ausgestattet.

Diese bekannte riegelartige Befestigungsvorrichtung ist mit dem erheblichen Nachteil behaftet, daß die dort vorgesehene schräg verlaufende und verzahnte Riegelfläche keine präzise flächige kraftschlüssige und insbesondere elektrisch leitende Verbindung zweier flächenebenen Bauelemente gewährleistet.

Außerdem ist aus der US-A-3 235 219 ein mittelbares riegelartiges Befestigungselement aus einem Kunststoff bekannt, mit einem Bolzen, der einseitig mit einen zylinderförmigen Kopf mit einer Ausbildung für den Eingriff eines Werkzeuges versehen ist, und der auf der anderen Bolzenendseite mit einer radialen riegelartigen Formgebung ausgestattet ist. Dieses Befestigungselement eignet sich zum kraftschlüssig lösbaren Verbinden beispielsweise zweier Platten, wobei der Riegel am Befestigungselement durch einen entsprechend ausgebildeten Durchbruch in der benachbarten zu befestigenden Platte hindurchgreift und durch Verdrehen um ca. 90° den zu befestigenden Gegenstand arretiert. Eine, auf der Riegelinnenseite vorgesehene, schräg ansteigende Fläche begünstigt dort die kraftschlüssige Befestigung.

Auch diese bekannte riegelartige Befestigungsvorrichtung ist mit dem erheblichen Nachteil behaftet, daß mit der speziellen Riegelausbildung insbesondere mit der schräg verlaufenden, in Befestigungsrichtung ansteigend ausgebildeten, Riegelfläche keine flächige Befestigungswirkung auf zwei miteinander zu befestigenden Bauteilen erzielbar ist. Außerdem ist diese bekannte, aus einem Kunststoff bestehende, Befestigungsvorrichtung zur optimalen elektrisch leitenden Verbindung zweier Bauelemente ungeeignet.

Außerdem ist aus der DE 33 03 254 A1 ein Schnellverschluß zur Verbindung zweier mit koaxialen Bohrungen versehenen Bauteilen bekannt, der aus einem, mit seinem Schaft durch die Bohrungen hindurchsteckbaren und an seinem das eine Bauteil erfassenden Kopf mit Mitteln zum Drehen versehenen Kopfbolzen, einer an der Außenseite des anderen Bauteils mit ihrem gelochten Steg an der dortigen Bohrung anbringbaren, u-förmigen Federklammer, deren zu den Enden konvergierende und gegeneinander federnde Schenkel in zwei, am Bolzenschaft mit Axialabstand zum Schaftende diametral zueinander angeordnete, Kerben einrastet, die zum Schaftende hin von radialen Schulterflächen begrenzt sind, sowie einem elastischen Glied zum axialen Verspannen der Enden der Federschenkel gegen die Schulterflächen im Schließzustand, wobei am Schaltende des Kopfbolzens zwei einander gegenüberliegende, schneidenförmig zugespitzte, Oberflächen zum selbsttätigen Ausrichten des Kopfbolzens beim Einführen zwischen die Federschenkel in einer Drehrichtung angeordnet sind, in welche die Kerben zu den Federschenkeln einen Drehwinkel von weniger als 90° einnehmen.

Dieser Schnellverschluß ist mit dem Nachteil behaftet, daß dort zusätzlich zum sogenannten Kopfbolzen eine u-förmige Federklammer oder dergleichen Element erforderlich ist.

Der Erfindung liegt die Aufgabe zugrunde, einen Schnellverschluß der eingangs genannten Art zu schaffen, der die Nachteile der bekannten Verschraubungen oder Schnellverschlüsse beseitigt, und der einteilig ausgebildet, technisch einfach aufgebaut, universell einsetzbar, rationell und wirtschaftlich herstellbar und montierbar ist.

Diese Aufgabe wird mit den Merkmalen im kennzeichnenden Teil des Patentanspruch 1 gelöst und in den Unteransprüchen sind weitere vorteilhafte Einzelheiten beansprucht.

Vorteilhaft bei dem neuen einteiligen Schnellverschluß ist nicht nur die zweckmäßige, insbesondere einstückige, Ausbildung des Ganzen mit einem Kopf, einem zum Kopf einseitig vorgesehenen. räumlich im Umfang kleineren, Bolzen und einem am anderen Ende des Bolzens vorgesehenen, stegförmig ausgebildeten, radial mindestens einseitig den Bolzen überragenden Riegel, der dem Kopf benachbart, in bekannter Weise mit mindestens einer zum Kopf hin in Schließrichtung schräg ansteigend verlaufenden Riegelfläche versehen ist, sondern auch, daß neuerungsgemäß auf der dem Riegel benachbarten Seite des Kopfes zweckmäßigerweise räumlich leicht erhaben ausgebildete, radial verlaufende und in gewissen räumlichen Abständen zueinander angeordnete, in Gegenschließrichtung, gegen ein selbsttätiges Öffnen wirksame schneidenförmige Sicherungskanten vorgesehen sind.

Vorteilhaft sind ferner die am Umfang des Bolzens zwischen dem Kopf und dem Riegel des Verbindungselementes axial verlaufenden, zum Bolzenumfang erhaben angeordneten, insbesondere prismatisch ausgebildeten, in bestimmten Abständen zueinander positionierten, sogenannten Schaberkanten, die beim Verdrehen bzw. kraftschlüssigen Befestigen des Verbindungselementes bewirken, daß die benachbarten Lochflächen derart beaufschlagt werden, daß bei metallischen Lochflächen eine 100%ig elektrische Leitfähigkeit zwischen zwei, mittels eines neuen metallischen Verbindungselementes miteinander zu verbindenenden, Metall-Blechen gewährleistet wird. D.h. das Verbindungselement wirkt als sogenannte Erdungsklemme.

Einige Ausführungs- und Anwendungsbeispiele sind in den Zeichnungen dargestellt und werden im folgenden näher erläutert. Es zeigen
- Fig. 1: eine schaubildliche Draufsicht auf ein Spannelement,
- Fig. 2: eine schaubildliche Unteransicht des Spannelementes nach Fig. 1,
- Fig. 3: eine Seitenansicht auf das Spannelement nach Fig. 1 und 2,
- Fig. 4: eine zur Seitenansicht nach Fig. 2 um 90° gedrehte Seitenansicht des Spannelementes nach den Fig. 1 - 3,
- Fig. 5: eine Querschnittsansicht des Spannelementes nach Fig. 1 - 4 mit Blick auf den Riegel,
- Fig. 6: eine Querschnittsansicht des Spannelementes nach Fig. 1 - 4 mit Blick auf den Kopf.
- Fig. 7: eine Längsschnittansicht durch ein Spannelement nach Fig. 1 - 6,
- Fig. 8: eine schaubildliche Ansicht zweier miteinander verbundener Bauteile,
- Fig. 9: eine schaubildliche Ansicht zweier miteinander verbundener Traggerüstelemente, insbesondere von Elektro-Verteilergehäusen,
- Fig. 10: eine schaubildliche Ansicht eines, mit einem Verbindungselement ausgestatteten, Wandhalters für Blechschränke und Blechgestelle, insbesondere für Elektro-Verteilerschränke,
- Fig. 11: eine schaubildliche Ansicht eines, mit einem Verbindungselement ausgestatteten, Scharnier bzw. Türbefestigungselement für Blechschränke, insbesondere für Elektro-Verteilerschränke,
- Fig. 12: eine schaubildliche Ansicht eines, mit einem Verbindungselement ausgestatteten, Türverschlusses für Blechschränke, insbesondere für Elektro-Verteilerschränke,
- Fig. 13: eine schaubildliche Ansicht eines Verbindungselementes mit einem integrierten Kabelhalter und
- Fig. 14: eine schaubildliche Ansicht eines Elektro-Verteilerschrankes mit dort zum Einsatz kommenden Verbindungselementen.

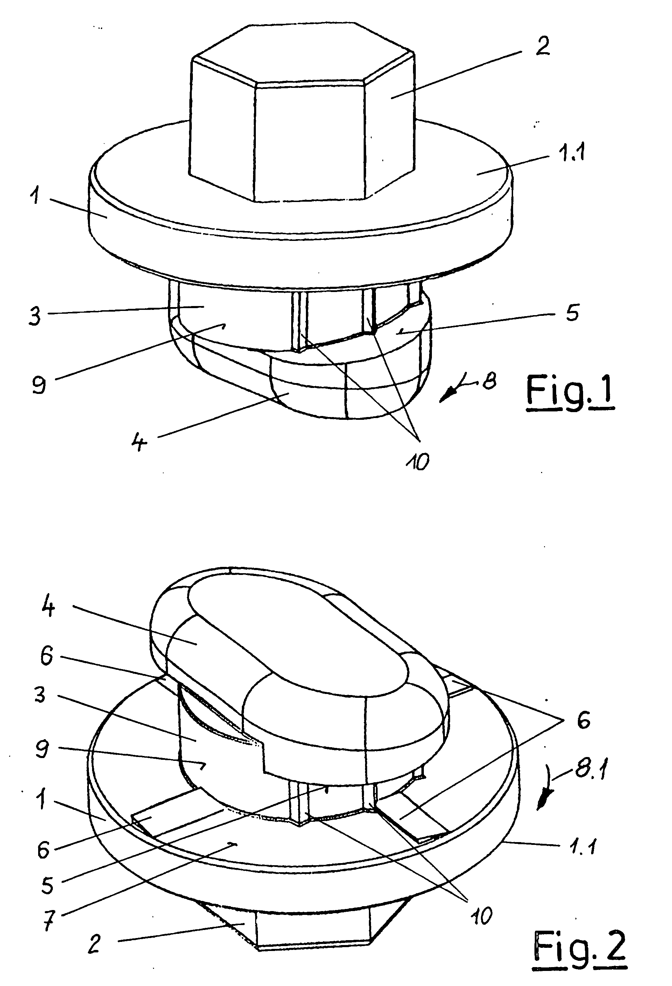

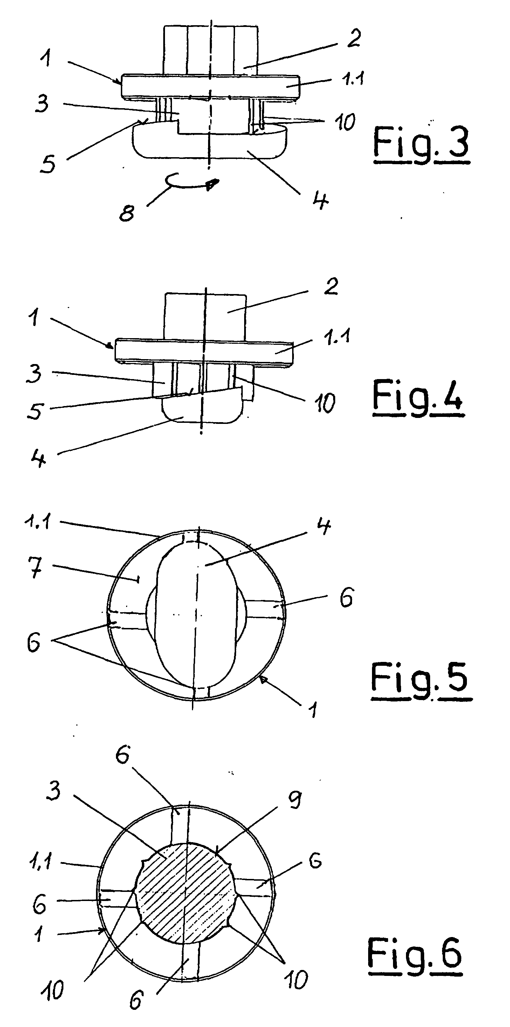

Das, in den Fig. 1 bis 7 dargestellte, insbesondere einstückige Verbindungselement 1 besteht im einzelnen aus einem, insbesondere zylinderförmigen, Kopf 1.1 mit einem dort vorderseitig einseitig vorgesehenen Sechskant 2, einem am Kopf 1.1 koaxial einseitig angeordneten, räumlich im Umfang 9 kleineren, Bolzen 3 und einem, am anderen Ende des Bolzens 3 vorgesehenen, stegförmig ausgebildeten, radial mindestens einseitig den Bolzen 3 überragenden Riegel 4, der dem Kopf 1.1 benachbart, mit mindestens einer einseitigen, zum Kopf 1.1 hin in Schließrichtung 8 schräg ansteigend verlaufenden, Riegelfläche 5 versehen ist.

6 bezeichnet einseitig schneidenförmige Sicherungskanten, die auf der, dem Riegel 4 benachbarten, Seite 7 des Kopfes 1.1, leicht erhaben ausgebildet, radial verlaufend und in räumlichen Abständen zueinander, zum Zwecke einer in Gegenschließrichtung 8.1 wirksamen Verdrehungssicherung angeordnet sind.

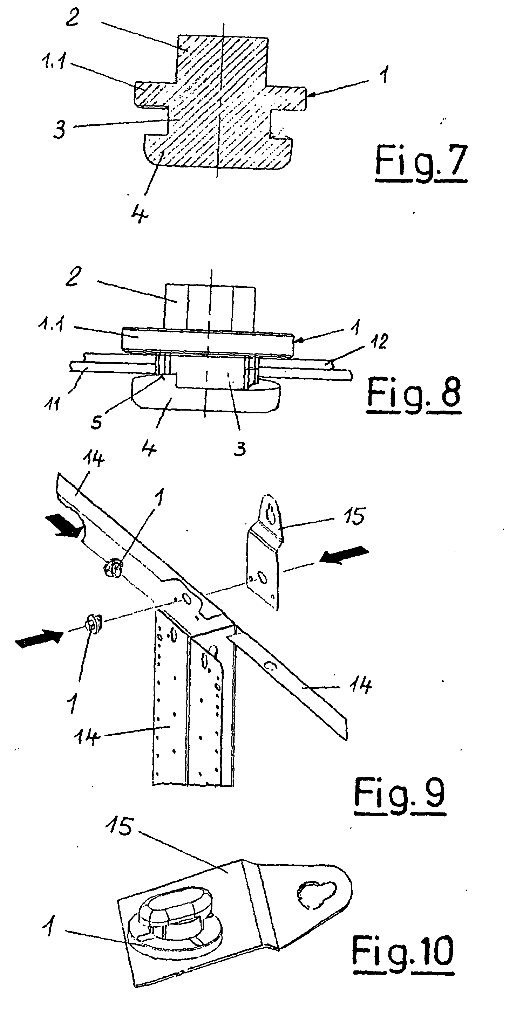

Wie aus den Fig. 1 bis 7 desweiteren ersichtlich ist, sind am Umfang 9 des Bolzens 3, zwischen dem Kopf 1.1 und dem Riegel 4, axial verlaufende, zum Bolzenumfang 9 erhaben angeordnete, insbesondere prismatisch ausgebildete, in bestimmten räumlichen Abständen am Umfang 9 verteilte, sogenannte Schaberkanten 10 vorgesehen, die, wie die Fig. 8 zeigt, beim Verdrehen des Verbindungselementes 1 zum Zwecke der kraftschlüssigen Verbindung zweier Metall-Bleche 11 und 12, die Lochflächen 13 derart form- und kraftschlüssig beaufschlagen, daß eine 100%ige elektrische Leitfähigkeit der beiden Bleche 11 und 12 durch das Verbindungselement 1 erzielt wird. D.h. das neue Verbindungselement 1 ist, wie der vorliegende Fall zeigt, nicht nur als zweckmäßiges Verbindungselement für bandoder plattenförmige elektrische Leiter einsetzbar, sondern auch als mittelbare Erdungsklemme insbesondere im elektrischen Verteilergehäusebau einsetzbar, wie aus der Fig. 9 näher ersichtlich wird.

Die Fig. 9 zeigt im einzelnen zwei metallische Traggerüstelemente 14, die mittels der neuen, insbesondere metallischen, Verbindungselemente 1 lösbar kraftschlüssig und elektrisch leitend miteinander verbunden sind.

15 bezeichnet einen aus einem Blech gestanzten Wandhalter, der zum Aufhängen und Befestigen der Traggerüstelemente 14 mittels eines Verbindungselementes 1 an einem Traggerüstelement 14 kraftschlüssig befestigt ist. 16 bezeichnet weitere Befestigungslöcher in den Traggerüstelementen 14 für den erforderlichen Eingriff von Verbindungselementen 1.

Es liegt im Rahmen der Erfindung, daß, wie aus der Fig. 10 ersichtlich ist, der Wandhalter 15 unmittelbar kraftschlüssig, insbesondere einstükkig, mit einem Verbindungselement 1 ausgestattet ist. Es ist vorgesehen, daß der Wandhalter 15 zusammen mit dem Verbindungselement 1, insbesondere in einem zweckmäßigen Gußverfahren, einstückig hergestellt ist.

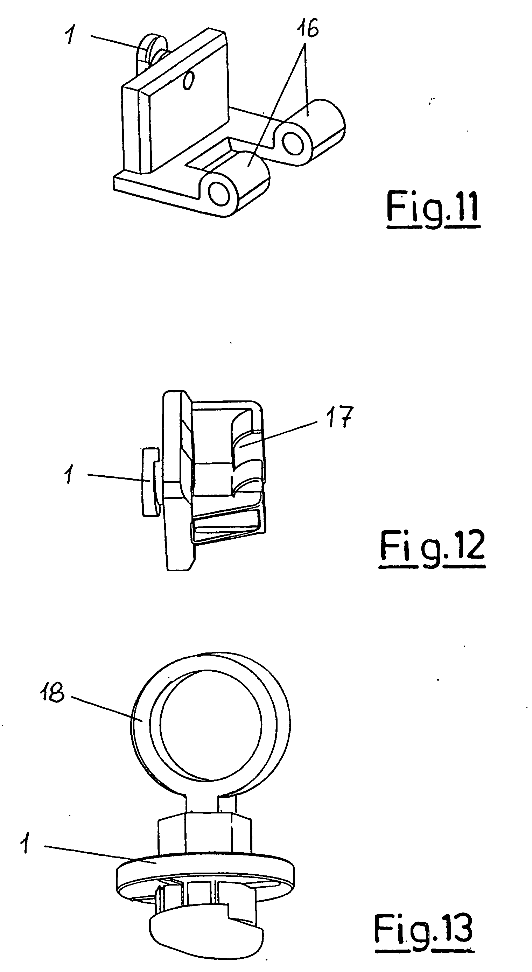

Außerdem ist es vorgesehen, daß das neue Verbindungselement 1, insbesondere einstückig, mit einem Scharnier 16, oder einem Türverschluß 17 oder einem Kabelhalter 18 versehen sind, wie dies aus den Fig. 11, 12 und 13 näher ersichtlich ist.

Die Fig. 11 zeigt ein Verbindungselement 1, das anstelle des Kopfes 1.1 gemäß Fig. 1 unmittelbar mit einem einseitigen Flansch 19 eines dazu im rechten Winkel angeordneten Scharniers 16 verbunden ist.

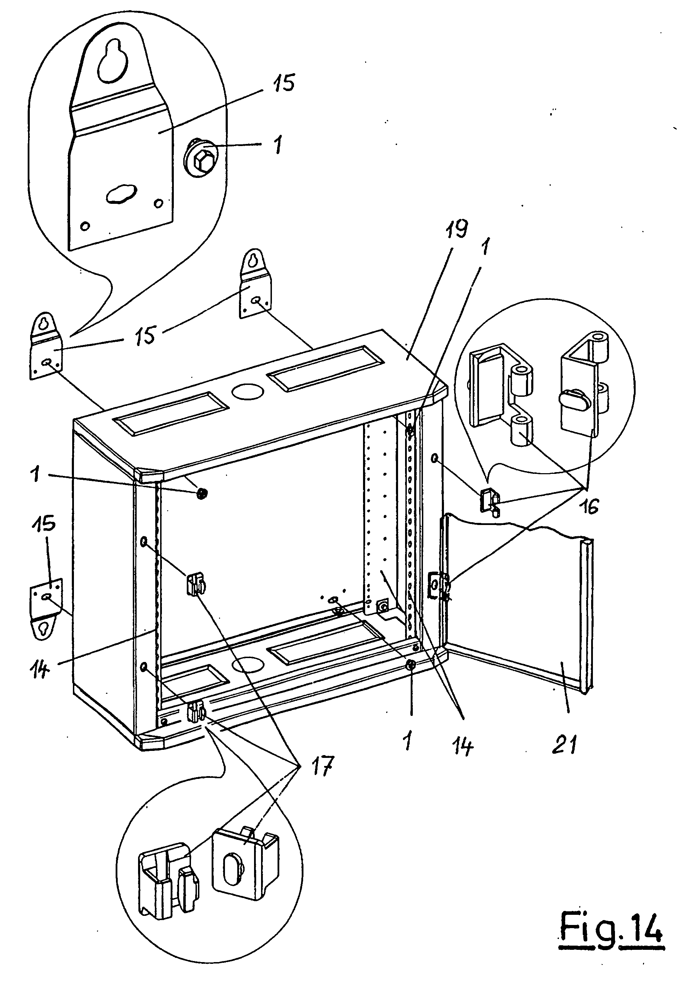

Solche Scharniere 16, Türverschlüsse 17 und/oder Kabelhalter 18 sind in vorteilhafter Weise im Bau von Elektro-Verteilerschränken einsetzbar, wie aus der Fig. 14 näher ersichtlich ist.

In der Fig. 14 bezeichnet 19 einen Elektro-Verteilerschrank mit integrierten Traggerüstelementen 14. 15 bezeichnet Wandhalter. 16 kennzeichi net Türscharniere bzw. Türbefestigungselemente und 17 bedeutet einen Türverschluß. 1 zeigt Verbindungselemente, die teilweise lose oder einstückig mit einem Türscharnier 16 oder einem Türverschluß 17 angeordnet sind. 21 bezeichnet ein Türelement.

Es liegt im Rahmen der Erfindung, daß das Verbindungselement 1 und etwaige mit dem Verbindungselement 1 einstückig verbundene Funktionselemente beispielsweise ein Wandhalter 15 oder ein Scharnier 16 oder ein Türverschluß 17 oder ein Kabelhalter 18 oder ein koaxial angeordneter Gewindebolzen, erforderlichenfalls auch aus einem anderen Werkstoff als einem Metall bzw. aus einem Metallguß, beispielsweise aus einem geeigneten Kunststoff, zweckmäßig hergestellt ist.

Außerdem liegt es im Rahmen der Erfindung, daß anstelle eines einseitigen Sechskantes 2 am Kopf 1.1, auf der Vorderseite 20 des Kopfes 1.1 auch ein Querschlitz für den Eingriff eines Schraubendrehers oder eine anderweitige Angriffsvorrichtung für ein entsprechendes Betätigungswerkzeug vorgesehen ist.

Desweiteren ist es vorgesehen, daß der Umfang des Kopfes 1.1 sechskantförmig, erforderlichenfalls mit einem zusätzlichen vorderseitigen Querschlitz, ausgestattet ist. Es ist in diesem Rahmen der Erfindung auch vorgesehen, daß der zum Bolzen 3 radial stegförmig verlaufende Riegel 4, erforderlichenfalls nach zwei Seiten hin, den Umfang 9 des Bolzens 3 radial überragt; sodaß dadurch ein sogenannter Doppelriegel gebildet wird.

## Patentansprüche

1. Mechanisches Verbindungselement (1) mit einem Bolzen (3), einem am Bolzen (3) einseitig koaxial verlaufend angeordneten zylinderförmigen Kopf (1.1), der einseitig mit einer Formgebung für den Eingriff eines Betätigungswerkzeuges versehen ist, und mit einem am Bolzen (3) einseitig radial verlaufend angeordneten Riegel (4), der mit einer zum Kopf (1.1) hin weisenden axial schräg verlaufenden Riegelfläche (5) versehen ist, **dadurch gekennzeichnet, daß** auf der dem Riegel (4) benachbarten Seite (7) des Kopfes (1.1), leicht erhaben ausgebildete, radial verlaufende, in räumlichen Abständen zueinander angeordnete und in Gegenschließrichtung (8.1) flächig leicht ansteigende Sicherungskanten (6) vorgesehen sind.

2. Verbindungselement (1) nach Anspruch 1, **dadurch gekennzeichnet, daß** am Umfang (9) des Bolzens (3), zwischen dem Kopf (1.1) und dem Riegel (4) axial verlaufende, zum Umfang (9) erhaben angeordnete einen prlsmatischen Querschnitt aufweisende und am Umfang (9) in bestimmten räumlichen Abständen zueinander angeordnete Schaberkanten (10) vorgesehen sind.

3. Verbindungselement (1) nach Anspruch 1 und 2, **dadurch gekennzeichnet, daß** der Kopf (1.1) des Verbindungselements vorderseitig mit einem einseitigen Sechskant (2) versehen ist.

4. Verbindungselement (1) nach Anspruch 1 bis 3, **dadurch gekennzeichnet, daß** der Umfang des Kopfes (1.1) sechskantförmig ausgebildet ist.

5. Verbindungselement (1) nach Anspruch 1 bis 4, **dadurch gekennzeichnet, daß** der Kopf (1.1) vorderseitig mit einem Querschlitz versehen ist.

6. Verbindungselement (1) nach Anspruch 1 bis 5, **dadurch gekennzeichnet, daß** am Kopf (1.1) ein Wandhalter (15) einstückig angeordnet ist.

7. Verbindungselement (1) nach Anspruch 1 bis 6, **dadurch gekennzeichnet, daß** auf der Vorderseite des Kopfes (1.1) ein Scharnier (16) einstückig angeordnet ist.

8. Verbindungselement (1) nach Anspruch 1 bis 6, **dadurch gekennzeichnet, daß** auf der Vorderseite des Kopfes (1.1) ein Türverschluß (17) einstückig angeordnet ist.

9. Verbindungselement (1) nach Anspruch 1 bis 6, **dadurch gekennzeichnet, daß** auf der Vorderseite des Kopfes (1.1) ein Kabelhalter (18) oder ein Gewindebolzen angeordnet ist.

10. Verbindungselement (1) nach Anspruch 1 bis 9, **dadurch gekennzeichnet, daß** das Verbindungselement (1) einstückig aus einem Metallguß, hergestellt ist.

11. Verbindungselement (1) nach Anspruch 1 bis 9, **dadurch gekennzeichnet, daß** das Verbindungselement (1) aus einem Kunststoff hergestellt ist.

## Claims

1. Mechanical connecting element (1) with a pin (3), a cylindrical head (1.1), which is arranged at the pin (3) at one end to extend coaxially and which is provided at one end with a shape for engagement of an actuating tool, and a lock (4), which is arranged at the pin (3) at one end to be radially extending and which is provided with a locking surface (5) extending at an axial inclination facing towards the head (1.1), **characterised in that** securing edges (6), which are formed to be slightly raised, extend radially, are arranged at mutual physical spacings and slightly rise in planar manner counter to closing direction (8.1), are provided on the side (7) of the head (1.1) adjacent to the lock (4).

2. Connecting element (1) according to claim 1, **characterised in that** scraper edges (10), which extend axially between the head (1.1) and the lock (4), are arranged to be raised relative to the circumference (9), have a prismatic cross-section and are arranged at the circumference (9) at specific mutual physical spacings, are provided at the circumference (9) of the pin (3).

3. Connecting element (1) according to claim 1 and 2, **characterised in that** the head (1.1) of the connecting element is provided at the front side with a one-sided hexagon (2).

4. Connecting element (1) according to claim 1 to 3, **characterised in that** the circumference of the head (1.1) is formed to be hexagonal.

5. Connecting element (1) according to claim 1 to 4, **characterised in that** the head (1.1) is provided at the front side with a transverse slot.

6. Connecting element (1) according to claim 1 to 5, **characterised in that** a wall mount (15) is integrally arranged at the head (1.1).

7. Connecting element (1) according to claim 1 to 6, **characterised in that** a hinge (16) is integrally arranged on the front side of the head (1.1).

8. Connecting element (1) according to claim 1 to 6, **characterised in that** a door closure (17) is integrally arranged on the front side of the head (1.1).

9. Connecting element (1) according to claim 1 to 6, **characterised in that** a cable holder (18) or a threaded bolt is arranged on the front side of the head (1.1).

10. Connecting element (1) according to claim 1 to 7, **characterised in that** the connecting element (1) is integrally produced from a metal casting.

11. Connecting element (1) according to claim 1 to 9, **characterised in that** the connecting element (1) is produced from a synthetic material.

## Revendications

1. Élément de fixation mécanique (1) comprenant une cheville (3), une tête cylindrique (1.1) disposée de manière à s'étendre coaxialement d'un côté de la cheville (3), la tête étant pourvue d'un côté d'un façonnage pour venir en prise avec un outil d'actionnement, la tête étant en outre pourvue d'un verrou (4) disposé de manière à s'étendre radialement d'un côté de la cheville (3), ledit verrou (4) étant pourvu d'une surface de verrou (5) s'étendant de manière inclinée axialement en direction de la tête (1.1), **caractérisé en ce que** sur le côté (7) de la tête (1.1) adjacent au verrou (4) sont prévues des arrêtes de sécurité (6) formées légèrement en relief, s'étendant radialement, disposées l'une par rapport avec des écarts spatiaux et montant légèrement de manière plane dans le sens contraire à la fermeture (8.1).

2. Élément de fixation (1) selon la revendication 1, **caractérisé en ce que** sur la périphérie (9) de la cheville (3), sont prévues des arrêtes de raclage (10) s'étendant axialement entre la tête (1.1) et le verrou (4), disposés en relief sur la périphérie (9), présentant une section transversale prismatique et disposés les uns par rapport aux autres sur la périphérie (9) avec des écarts spatiaux déterminés.

3. Élément de fixation (1) selon les revendications 1 et 2, **caractérisé en ce que** la tête (1.1) de l'élément de fixation est pourvue sur le côté avant d'un six pan (2) unilatéral.

4. Élément de fixation (1) selon les revendications 1 à 3, **caractérisé en ce que** la périphérie de la tête (1.1) est réalisée sous la forme d'un six pan.

5. Élément de fixation (1) selon les revendications 1 à 4, **caractérisé en ce que** la tête (1.1) est pourvue sur le côté avant d'une fente transversale.

6. Élément de fixation (1) selon les revendications 1 à 5, **caractérisé en ce qu'**un dispositif de fixation à une paroi (15) est formé de manière monobloc avec la tête (1.1).

7. Élément de fixation (1) selon les revendications 1 à 6, **caractérisé en ce qu'**une charnière (16) est disposée de manière monobloc sur le côté avant de la tête (1.1).

8. Élément de fixation (1) selon les revendications 1 à 6, **caractérisé en ce qu'**une fermeture de porte (17) est disposée de manière monobloc sur le côté avant de la tête (1.1).

9. Élément de fixation (1) selon les revendications 1 à 6, **caractérisé en ce qu'**un support de câble (18) ou un boulon fileté est disposé sur le côté avant de la tête (1.1).

10. Élément de fixation (1) selon les revendications 1 à 7, **caractérisé en ce que** l'élément de fixation (1) est réalisé de manière monobloc en une fonte de métal.

11. Élément de fixation (1) selon les revendications 1 à 9, **caractérisé en ce que** l'élément de fixation (1) est réalisé en un matériau plastique.
